(19) Europäisches Patentamt
European Patent Office
Office européen des brevets

(11) **EP 4 373 747 B1**

(12) **EUROPEAN PATENT SPECIFICATION**

(45) Date of publication and mention
of the grant of the patent:
**18.06.2025 Bulletin 2025/25**

(21) Application number: **22730446.6**

(22) Date of filing: **24.05.2022**

(51) International Patent Classification (IPC):
**B64F 1/02** (2006.01)     **E01C 9/00** (2006.01)
**E01C 5/06** (2006.01)

(52) Cooperative Patent Classification (CPC):
**B64F 1/025; E01C 5/065; E01C 9/007**

(86) International application number:
**PCT/EP2022/064041**

(87) International publication number:
**WO 2023/001431 (26.01.2023 Gazette 2023/04)**

(54) **ENGINEERED MATERIAL ARRESTING SYSTEM**

FLUGZEUGFANGEINRICHTUNG MIT TECHNISCHEM MATERIAL

SYSTÈME D'ARRÊT EN MATÉRIAU D'INGÉNIERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.07.2021 NO 20210934**

(43) Date of publication of application:
**29.05.2024 Bulletin 2024/22**

(73) Proprietor: **Runway Safe IPR AB**
**411 36 Göteborg (SE)**

(72) Inventors:
• **BARSOTTI, Matt**
**Austin, Texas TX 78739 (US)**
• **HADJIOANNOU, Michalis**
**Austin, Texas TX 78736 (US)**
• **HELGESEN, Kjell Håkon**
**1185 Oslo (NO)**
• **NARMO, Jon A.**
**2317 Hamar (NO)**

(74) Representative: **AWA Sweden AB**
**P.O. Box 11394**
**404 28 Göteborg (SE)**

(56) References cited:
EP-A1- 3 297 920     DE-B4- 10 041 492
US-A- 3 967 704     US-B1- 6 726 400

**Description**

This invention relates to Engineered Material Arresting Systems (EMAS) beds for decelerating and steering vehicles/aircrafts unable to stop on their own. More precisely, the invention relates to EMAS-beds having a course directing effect on vehicles entering the bed.

**Background**

A runway overrun is a landing accident with potentially fatal consequences caused by an aircraft being unable to stop before it reaches the end of the runway. Typical causes for runway overruns are pilot errors, poor weather, and/or a technical fault with the aircraft.

Engineered Materials Arresting Systems (EMAS) are systems installed at the ends of runways to help arrest aircraft that fail to stop before reaching the end of the runway. EMAS design typically involves optimizing the bed geometry to provide the best overall fleet performance. Fleet optimization requires compromises and results in sub-optimal performance for some of the aircraft. Shallow beds and softer materials improve the arresting performance for smaller aircraft, but large aircraft require the opposite traits. Consequently, there is significant motivation to develop EMAS concepts that can improve the performance for mixed fleets of large and small aircraft. Because most airports serve a wide range of aircraft, EMAS should advantageously be designed to stop planes of very different sizes, ranging from as little as 12 metric tons up to 450 metric tons. Aircraft may have very different tire sizes, ranging from less than 50 cm to above 145 cm in diameter. EMAS are specifically designed for the typical fleet of aircraft serviced by a particular airport, and they are tailored to the available space beyond the end of the runway.

**Prior art**

EMAS typically consist of large shallow beds of absorbent material that engage an aircraft's tires and absorbs the aircraft's kinetic energy to bring it to a controlled stop. Commercially available EMAS use different types of construction, but the principal absorbing materials are typically cementitious foam block or glass foam aggregate.

US 3,967,704 describes a safety device for quickly arresting the movement of vehicles such as aeroplanes and motor cars by forming a retarding bed of crushable material adjacent to a vehicle track. A foam is formed from an amino plastic resin composition and laid down in a bed adjacent to the vehicle track where it is cured in situ to produce a non-resilient cured foam body having a compressive strength between 15 and 50 p.s.i. (0.10 to 0.34 MPa) and a density from 0.25 to 10 pounds per cubic foot (4 to 160 kg/m$^3$). The document describes an example embodiment of the bed having uniform thickness in a central position and sloping sides to provide a centralising effect on aircraft using it. Another example describes transversally extending linear zones of compactible foam material having differing densities and compressive strengths.

US 5,885,025 describes vehicle arresting assembled of a large number of blocks of cellular concrete having predetermined compressive gradient strength, so that aircraft landing gear is subjected to drag forces effective to slow a variety of types of aircraft, while providing deceleration within a safe range of values. An arresting bed typically includes an entry region of a depth increasing from 9 to 24 inches (23 to 61 cm) formed of blocks having a first compressive gradient strength. A second region, which may be tapered into the first region and increase in depth to 30 inches (76) cm, is formed of blocks having a greater compressive gradient strength. An aircraft thus experiences increasing drag forces while it travels through the bed, to provide an arresting capability suitable for a variety of aircraft. A protective hard coat layer of cellular concrete of strength greater than the blocks overlays the blocks to enable service personnel to walk on the bed without damage. Arresting bed systems may be provided in alternative configurations, such as a bed formed of an aggregate including pieces of cellular concrete with or without interspersed pieces of other compressible material and covered by a hard coat layer. The document discloses further an example embodiment having blocks cellular cement in a first lateral row with a lower compressive gradient strength than blocks in the following lateral rows to increase the retardation effect on the aircraft in longitudinal direction.

US 10,458,073 B2 discloses systems and methods for arresting aircraft. In specific embodiments, the systems and methods can be useful in arresting light aircraft because they typically do not have the weight to penetrate available EMAS systems. The system is generally provided as a structure having a suspended layer of energy absorbing material. A lower portion of the system can have a lower strength, used as a method to suspend an upper, stronger/more highly energy absorbent portion of the system.

The concept of using block foam glass material has been explored by the US Transportation Research Board and documented in ACRP Report 29 [1]. Glass foam block material was determined to have many desirable EMAS characteristics, include a nearly ideal compaction stress-strain curve, chemical inertness, low strain rate dependency, and environmental durability, and inflammability. The report described design concepts involving glass foam arranged either in prefabricated blocks or built-up on-site at a runway. Block concepts would involve joints and seams between blocks, while a built-up approach could be constructed to provide a continuous surface. Because glass foam is typically manufactured in relatively small block or board geometries, the report envisioned that smaller boards would be glued together to create larger blocks or built up in layers to create a monolithic bed. ACRP Report 29 also describes a prefabricated block having a depth-varying by multiple layers of compactible foam material having different compressive strengths are glued together such that softer layers would be placed near the surface of the bed, while firmer layers would be placed near the bottom. This concept was intended to help improve the performance of arrestor-beds with mixed aircraft fleets. Lighter aircraft would engage primarily with softer layers of compactible foam near the surface, while heavier aircraft would penetrate more deeply and engage with firmer layers of foam near the bottom. The report described modeling and simulation results that showed improved mixed fleet performance compared with EMAS that have a single strength of material throughout the thickness.

US 2019/084693 discloses a vehicle arresting system includes a base layer comprising a crushable aggregate and a cover layer comprising a cementitious material having an oven-dry density of 100 lb/ft3 or less. The system also may include an arrestor bed and a plurality of anchors. Each anchor includes a support rod coupled to an associated puck, each support rod being secured to a foundation that supports the arrestor bed, and each puck being embedded in the cover layer slab of the arrestor bed. Additionally, each support rod is coupled to its associated puck via a shear link breakable at a predetermined load. A method for arresting a vehicle includes depositing a base layer on a region where the vehicle is to be arrested, the base layer comprising an aggregate, and depositing a cover layer over the base layer, the cover layer including a cementitious material having an oven-dry density of 100 lb/ft3 or less.

US 2015/247298 discloses macro-patterned materials and methods of their use in connection with vehicle arresting systems. Certain embodiments provide 3-D folded materials, honeycombs, lattice structures, and other periodic cellular material structures, that can be used for arresting vehicles. The materials can be engineered to have properties that allow them to reliably crush in a predictable manner under pressure from a vehicle. The materials can be formed into various shapes and combined in various ways in order to provide the desired properties.

The depth-varying concept was originally proposed in ACRP Report 29 as being comprised of multiple layers or strata of compactible foam adhered to another to achieve the full EMAS bed thickness. The layers at the bottom of the block would have the highest density and crush strength, while the layer at the top would have the lowest density and crush strength. The depth-varying properties of the bed would provide improved mixed-fleet arresting performance by allowing light aircraft to engage the soft upper layers, while heavy aircraft would penetrate more deeply and engage the firmer lower layers of material.

Aircraft overruns are emergency situations in which one or more things have gone wrong. When an overrun occurs, aircraft often do not exit along the centerline of the runway, but instead may be offset to the left or right. Aircraft also may not travel in a parallel direction to the runway, but instead may veer along a diagonal line of travel. Additionally, the typical design of runways involves a shallow side slope to facilitate water drainage, which may increase veering behavior in some situations. When aircraft veer diagonally, it can result in the aircraft taking a shorter path through an EMAS arrestor-bed. This results in a premature exit along the lateral edge of the bed, thereby shortening the length of travel through the bed and reducing the protection the EMAS was designed to provide. EMAS presently have no design features to control the path of aircraft travel, and innovations that could provide a centering effect are desirable.

**Objective of the invention**

The main objective of the invention is the provision of Engineered Material Arresting Systems (EMAS) beds for decelerating and steering vehicles/aircrafts unable to stop on their own.

**Description of the invention**

The invention is based on the realisation that linear zones of relatively low compressive strength material in an EMAS bed of otherwise higher compressive strength material may be utilised to give the EMAS bed a directional loading on the wheels of an overrunning vehicle/aircraft which assists steering the vehicle/aircraft to travel through the EMAS-bed in its longitudinal direction.

Thus, in a first aspect, the invention relates to a vehicle arresting system, comprising:
an arrestor-bed of a compactible foam material having a bulk compressive strength and a longitudinal centre axis extending from a front end to a back end opposite the front end,
characterised in that
the arrestor-bed further comprises a plurality of linear zones in the compactible foam material having a compressive strength lower than the bulk compressive strength of the compactible foam material, where each of the linear zones of the plurality extends:
either

a) in parallel with the longitudinal centre axis of the bed,

or

b) is angled with an angle $\alpha$, where $0° < \alpha \le 45°$, towards the longitudinal centre axis of the arrestor-bed, such that the plurality forms, as seen from above, an inverted V-pattern relative to a direction from the front end to the back end of the arrestor-bed,

or

c) a combination of a) and b).

The term "longitudinal" as used herein refers to the direction at which a vehicle/- aircraft entering the arrestor-bed is expected to travel across the arrestor-bed. The term "front end" as used herein is the side at which the vehicle/aircraft is expected to enter the arrestor-bed/EMAS and the "back side" is the side opposite the front end. The arrestor-bed may in some embodiments be shaped into a longitudinal rectangular bed (as seen from above), i.e. having a relatively short width as compared to its length.

The term "arrestor-bed" as used herein refers to a bed of a compactible foam material laid over a stretch of ground or felled into the ground like e.g. a basin filled with the compactible foam material. The arrestor-bed is in some embodiments laid at the end of a runway but may be laid/applied at any location where a vehicle/aircraft may be expected to become (involuntary) in need for external assistance to make a controlled stop. However, even though the arrestor-bed will hereafter be described in relation to airfields and the need for averting aircraft overrun accidents, the arrestor-bed according to the invention is not confined to aviation/airfields but may be applied for absorbing the kinetic energy and stop any wheeled vehicle crossing the arrestor-bed at any location wherever such functionality may be wanted.

The invention according to the first aspect is not tied to any particular design, size or location, but encompasses any size and design of arrestor-beds known or conceivable to the person skilled in the art. Furthermore, the present invention is not reliant on how the arrestor-bed is made or assembled. Any known and conceivable way of forming a bed of a compactible foam material on a location where an arrestor-bed is to be located is included in the present invention as long as the arrestor-bed is provided with a set of linear zones of relatively low compressive strength being a) arranged either in parallel with the longitudinal centre axis of the bed, or b) are angled with an angle $\alpha$, where $0° < \alpha \le 45°$, towards the longitudinal centre axis of the bed forming an inverted V-pattern relative to a direction from the front end to the back end of the arrestor-bed, or a combination of a) and b). In some embodiments, the set of linear zones of relatively low compressive strength may be angled with an angle $\alpha$, where $0° < \alpha \le 40°$, preferably $1° \le \alpha \le 35°$, more preferably $2° \le \alpha \le 30°$, more preferably $3° \le \alpha \le 25°$, more preferably $4° \le \alpha \le 20°$, more preferably $5° \le \alpha \le 15°$, and most preferably $5° \le \alpha \le 10°$ towards the longitudinal centre axis of the bed forming an inverted V-pattern relative to a direction from the front end to the back end of the arrestor-bed. It is evident from the context that the angle $\alpha$ towards the longitudinal centre axis of the arrestor-bed is an angle formed in a horizontal plane such that the inclination of the linear zones causes a lateral force on a vertically oriented wheel travelling in a longitudinal direction through the arrestor-bed.

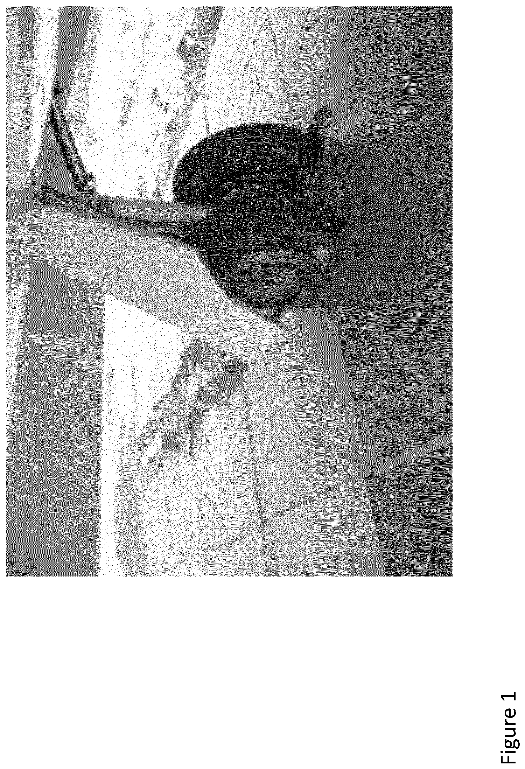

The compactible foam material of an arrestor-bed has a tailored mechanical strength such that the arrestor-bed is unable to carry the wheel(s) of a vehicle/aircraft entering the arrestor-bed, but sinks some distance into the compactible foam material such that the compactible foam material absorbs kinetic energy from the vehicle/aircraft and brings it to a forced stop, such as shown in the photograph of figure 1. The arrestor-bed may in the literature also be denoted as an "Engineered Material Arresting System, EMAS." These terms are used interchangeably herein.

The term "compactible foam material" as used herein encompasses any material known to the person skilled in the art for being suitable as a deformable/collapsible material that engages an incoming wheel of a vehicle/aircraft and absorbs kinetic energy from the vehicle/aircraft to bring it to a controlled stop. Examples of suited materials include, but is not limited to, cellular cement, cellular cementitious material, foam cement, polymeric foam, honeycomb, metal honeycomb, vermiculite, perlite, ceramic foams, foam glass and other isotropic or anisotropic compactible/- deformable materials, or combinations thereof.

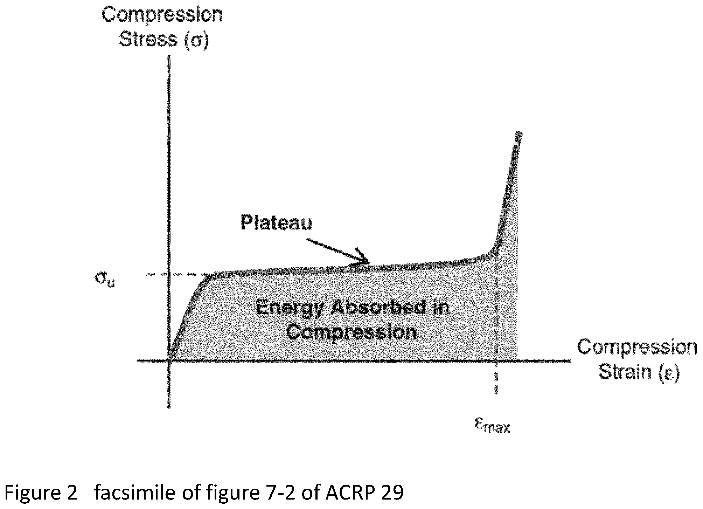

When a compactible foam material is subject to a stress load, it will sustain the stress load up to a certain plateau value, $\sigma_u$, at which the foam material starts to become crushed/compressed. The foam material will be progressively compacted during the plateau stress until all or almost all void spaces of the foam microstructure are collapsed. At this point, the material hardens significantly, and further compaction requires dramatically higher stresses/compression forces. A typical compression stress-strain curve for a compactible foam material is shown in figure 2. The degree of compaction at the end of the plateau will be referred to as the maximum compressive strain, $\varepsilon_{max}$, of the material, and is essential in determining the overall energy absorption potential of the compactible foam material because energy absorption relates to the area under the stress-strain curve. Greater maximum compression strain values correspond to long plateau regions in the load curve and high energy absorption. The term "compressive strength" as used herein refers to the plateau value, $\sigma_u$, as determined by ASTM C165-07 (2017) unless stated otherwise.

The compressive strength of compactible foam materials which provide an effective but controlled stopping action on vehicles/aircrafts depends on the expected tire pressure pressing onto the surface of the arrestor-bed by the wheels of the vehicle/aircraft entering the arrestor bed. Since the mass of vehicles/aircrafts may vary greatly, so does the range of compressive strength which provides an effective stopping action. It is necessary to adapt the compressive strength of the compactible foam material of the arrestor bed according to which vehicles/aircrafts are intended to be stopped by it. The determination of the required compressive strength is within the normal skills of a person skilled in the art and may be made by experimental material testing and/or numerical modelling as described in ACRP Report 29 [1], see e.g. chapters 8 and 9. In practice, when applying the vehicle arresting system on an airfield with passenger traffic, the compressive strength of the compactible foam material may advantageously be in the range from 6.9 to 689.8 kPa (1 to 100 psi), preferably from 68.9 to 620.5 kPa (10 to 90 psi), more preferably from 137.9 to 551.8 kPa (20 to 80 psi), more preferably from 206.8 to 482.6 kPa (30 to 70 psi), and most preferably from 275.8 to 413.7 kPa (40 to 60 psi).

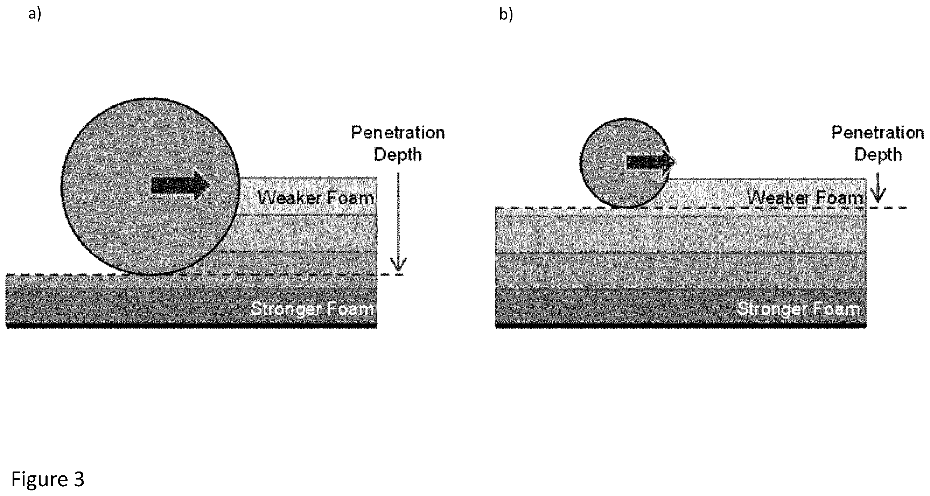

The arrestor-bed may in some embodiments have a depth-variation in the compressive strength with increasing compressive strength with increased depth of the bed. This provides the arrestor-bed with improved performance with mixed vehicle/aircraft since the wheels of the lighter vehicles will only engage the upper softer layer(s) while the wheels of a heavier vehicle/aircraft will engage deeper into to the arrestor-bed as illustrated schematically in figures 3a) and 3b). In the arrestor-bed shown in figure 3a) and 3b), the depth variation is obtained by providing the arrestor-bed with a stratified structure of a multiple of layers of compactible foam material having higher compressive strength for each consecutive layer of compactible foam material down to the bottom layer of the arrestor-bed.

The term "a set of linear stripes/zones of relatively low energy absorption" as used herein encompasses any possible way of providing the arrestor-bed with straight-lined and relatively narrow zones in the arrestor-bed where the energy absorbing material has a lower compressive strength and/or any other way of obtaining a relatively low braking effect on a wheel passing along such a linear stripe/zone as compared to passing through the bulk material of the arrestor-bed. The set of linear stripes/zones of relatively low energy absorption may be obtained in any known or conceivable manner comprising such as e.g. applying a compactible foam material having a relatively low compressive strength at each linear stripe/zone, applying a compactible foam material having a higher porosity than the bulk compactible foam material at each linear stripe/zone, forming through-going holes in the material at each stripe/zone, forming linear channels/depressions/trenches etc. in the upper surface and a distance down into arrestor-bed extending partially or completely through the depth of the arrestor-bed.

Since each linear zone is "surrounded" on both sides by relatively high compressive strength bulk compactible foam material, a wheel of a vehicle/aircraft entering a linear zone will find it easier to move along the linear zone than to move into the bulk part of the arrestor-bed. There will be a lateral force directing the wheel back to the soft zone if tries to exit the zone of soft and move into the relatively hard compactible foam material on the sides of the soft zone. The set of linear stripes/zones oriented as in alternative a) of the first aspect of the invention, provide the arrestor-bed according to the invention a course correcting effect seeking to guide the travelling path of wheels of a vehicle entering the arrestor-bed to move in a straight line in parallel with the longitudinal centre axis of the arrestor-bed. This effect is advantageous when an aircraft/vehicle enters the arrestor-bed in a traversing direction by contributing to aligning the vehicle path in the longitudinal direction and thus ensure a maximum passing length and thus maximum breaking effect. Linear stripes/zones oriented as in alternative b) of the first aspect of the invention, shaped into an inverted V-pattern, will exhibit the above described directing-effect but also a centralising effect assisting the vehicle to pass through the arrestor-bed in parallel and along the longitudinal centre axis of the arrestor-bed.

The arrestor-bed may in some embodiments be made up of prefabricated blocks of the compactible foam material being assembled and adhered together on location to form the arrestor-bed. The adhering of the blocks to each other may be obtained in any known or conceivable manner, by e.g. gluing, caulking, adhesive tape, etc.

In some embodiments, the prefabricated blocks are shaped into a rectangular parallelepiped having a rectangular base of length l and width w, where w ≠ l, and height h. The height h may be equal to or different from the width w and/or the length l. In some embodiments, the prefabricated blocks are shaped into a rectangular parallelepiped having a square base of length l and width w, where w = l, and height h. The height h may be equal to or different from the width w and the length l.

In some embodiments, the arrestor-bed may be assembled by blocks of varying sizes and/or heights. For example, the peripheral blocks may in some embodiments be given a reduced height as compared to the blocks in the middle part of the arrestor-bed to taper off the edges of the arrestor-bed. In other embodiments the arrestor-bed may be given a soft entry by applying successive rows of blocks with increasing height from the front end and a distance into the arrestor-bed from which the bed may have a constant thickness (height).

In some embodiments, the arrestor-bed may comprise a covering layer on top of the compactible energy absorbing material to protect it from the environment, jet blast, and so on. The invention may apply any known and conceivable covering layer known to the skilled person as suited for arrestor-beds made of a foamed/compactible energy adsorbing material. Examples of suitable covering layers include thin plastic tops, cement board tops, polymer coatings or sealants, paint, or a combination thereof.

In some embodiments, the arrestor-bed may be assembled by blocks having equal width from the front end to the back end such that it is formed a longitudinal and linear vertical interface between the blocks extending all the way through the arrestor-bed. By applying no, or relatively week gluing at these interfaces, the longitudinally oriented interfaces will function as a set of linear stripes/zones of relatively low energy absorption according to the first aspect of the invention.

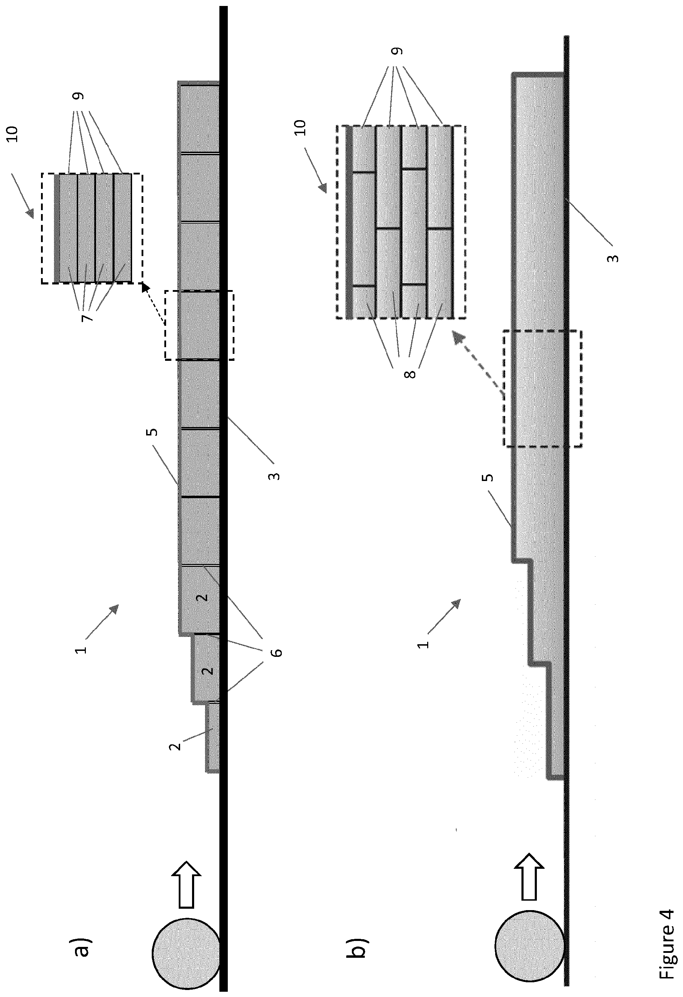

In some embodiments, each block may be made of a plurality of smaller blocks 7 adhered together in a stack by e.g. gluing. This will give the blocks a stratified layered structure. This way of assembling blocks to an arrestor-bed is sometimes denoted as the block-method. An example of such assembly to make an EMAS is shown schematically in figure 4a). The figure is a drawing schematically illustrating an arrestor-bed 1 made up of a plurality of rows 2, each made up of several blocks of a compactible energy absorbing material placed side by side. As seen from the detailed blown-up, each block in the bulk part of the arrestor-bed is made up of a plurality, here four, layers of smaller blocks 7 stacked and adhered together on top of each other. In this embodiment, the tapering-off at the front end may be obtained by simply applying a smaller number of smaller blocks in the stack for the first rows of the arrestor-bed. The rows 2 are sealed and adhered to each other along their side faces 6 by gluing or any other suitable manner. The sides of the blocks perpendicular to the side faces 6, i.e. the sides in parallel with the longitudinal axis of the arrestor-bed, may also be sealed and glued in the same manner, or alternatively, not be adhered/attached to each other or only relatively light adhered to have the longitudinally oriented sides of the function as a set of linear zones according to the first aspect of the invention. The embodiments shown in figures 4a) and 4b) comprise a covering layer 5.

In some embodiments, the blocks may have a stratified layered structure where each layer is made of smaller blocks 8 and where the small blocks each layer is offset relative to the layer beneath it such that the smaller blocks 8 form a brick pattern, such as shown in figure 4b). I.e., the prefabricated blocks 10 comprises a vertical stack of a plurality of stratified layers 9 adhered to each other and where each stratified layer 9 consists of a second plurality of smaller blocks 8 arranged in a single horizontal plane and where the smaller blocks 8 of a stratified layer 9 are offset relative to plurality of smaller blocks 8 of the stratified layer 9 beneath and/or above it from a bottom layer to a top layer such that the smaller blocks 8 of the prefabricated block 10 form a brick pattern. Such a construction will obtain an arrestor-bed with more monolithic mechanical properties.

In the embodiments with stratified layered blocks, the depth-variation in the compressive strength may be obtained by simply gluing together smaller blocks 7, 8 with gradually stronger compressive strength at lower depths such that the bottom layer has the highest compressive strength and the top the weakest each successive layer has a weaker compressive strength than the small block below it. An example of such embodiment is shown in figures 3a) and 3b).

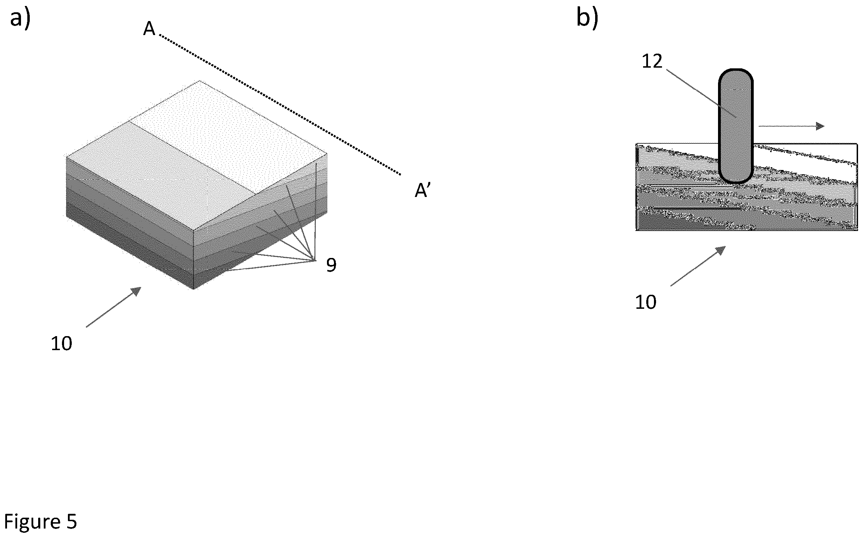

In some embodiments, the blocks with depth-variation may have inclined stratified layers oriented towards the centreline of the arrestor-bed. That is, the stratified layers are inclined such that they slope down towards the centreline by having the stratified layers 9 of the prefabricated blocks 10 inclined such that the stratified layers 9 are substantially parallel (i.e. horizontal) with the longitudinal centre axis in the longitudinal direction of the arrestor-bed and slope downwards in lateral direction towards the longitudinal centre axis of the arrestor-bed. Figure 5a) is a perspective drawing seen from the side and from the above of a single block 10 having six layers 9 of compactible energy absorbing material with gradually weaker compressive strength toward the top. As seen on the figure, each stratified layer is somewhat tilted towards the centreline shown as a stapled line marked with A and A'. Figure 5b) illustrates the same block as in figure 5a), but now seen from the side of a front side surface. A wheel 12 entering the block 10 and running in longitudinal direction will be in contact with relatively more of the weak compactible energy absorbing material on its right side (relative to the direction of travel) and thus be subject to a lateral force towards the centreline, as indicated by the black arrow on the figure.

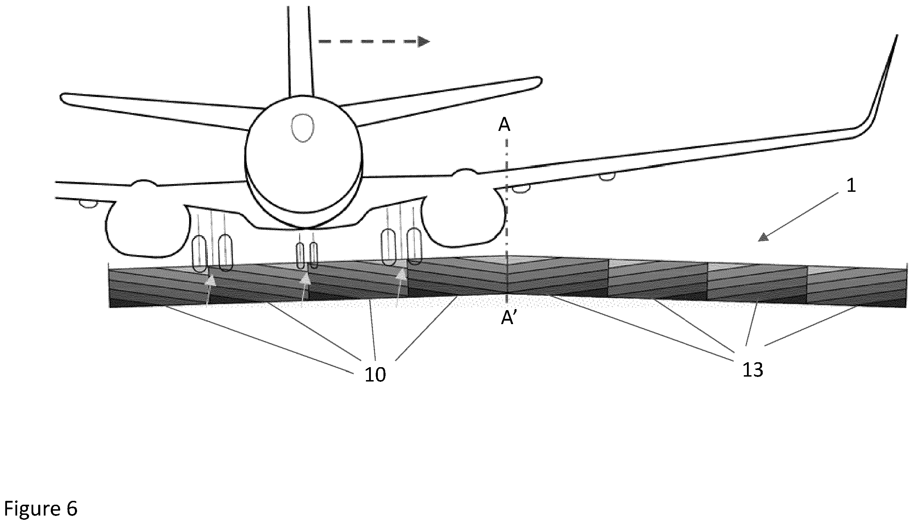

An example embodiment of an arrestor-bed assembled by blocks with depth-variation and inclined stratified layers is shown in figure 6). In this example embodiment, the arrestor-bed 1 comprises eight blocks with depth-variation and inclined stratified layers in each row (lateral direction), four blocks 10 on the left side and four blocks 13 on the right side of the centreline A-A'. The inclination of the layers of the blocks 10 on the left side of the centreline makes the stratified layers tilt downwards to their right side, while the inclination of the layers of the blocks 13 on the right side of the centreline makes the stratified layers tilt downwards to their left side. An aircraft entering the arrestor-bed out of line, e.g. to the left side of the arrestor bed as shown in this example, will be subject to a lateral force seeking to guide the aircraft to be aligned over the centreline. This effect comes in addition to the directing effect of the set of linear stripes/zones having a compressive strength lower than the bulk compressive strength according to the invention.

Manufacturing compactible energy absorbing materials in multiple compaction strengths can be expensive and more complex than manufacturing a single strength of material. Thus, in some embodiments, the depth-variation of the layers/strata of the blocks may be obtained by using a single strength compactible energy absorbing material and form linear and throughgoing void spaces, channels or holes in the layers with a decreasing percentage of void spaces in each successive layer down to the bottom of the block. The upper layer will produce a softer material response under a vehicle/aircraft tire loading than solid compactible energy absorbing material, thereby acting similar to a lower density compactible energy absorbing material with a lower compaction strength. The lower strata will produce a firmer material response under aircraft tire loading; in the limit, this strength will approach that of the solid compactible energy absorbing material. The lowest layer may be a continuous compactible energy absorbing material with no voids at all.

In an example embodiment, the one or the second plurality of smaller blocks 7, 8 of the top layer 9 of the stratified prefabricated block 10 has/have a first compressive strength, the one or the second plurality of smaller blocks 7, 8 of the first stratified layer 9 below the top layer has/have a second compressive strength, the one or the second plurality of smaller blocks 7, 8 of the second stratified layer 9 below the top layer has/have a third compressive strength, and so until the bottom stratified layer 9, and where the first compressive strength < the second compressive strength < the third compressive strength and so on until the bottom stratified layer 9.

The varying degree of percentage of void space in a layer may be obtained by forming larger and/or more numerous, linear and throughgoing voids, channels or holes in the layers. The linear and throughgoing voids, channels or holes in the layers may be obtained by milling, drilling or any other known and conceivable manner suitable for locally removing material from a compactible/foamed material. Alternatively, the linear and throughgoing voids may be obtained by assembling each layer of the block from relatively narrow strips of the compactible/foamed material which are glued together with a void space/a gap between them.

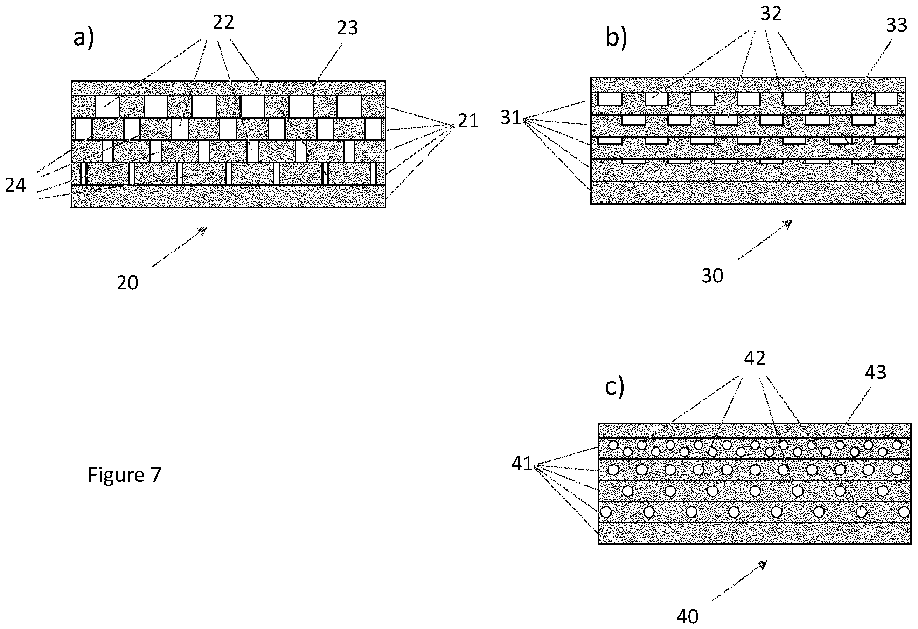

An example embodiment of a block made by strips glued together to form the stratified structure with depth-variation of the compressive strength is shown in figure 7a). The figure is a drawing of one block 20 as seen from a lateral side such the throughgoing voids 22 in the layers 21 become visible. The top layer, the layer just beneath the covering layer 23, is made up of relatively narrow strips 24 having relatively wide voids/gaps 22, while each successive layer 21 down in to the block has gradually wider strips 24 and narrower voids/gaps 22 down to bottom layer which is solid. In the example embodiment shown in figure 7b), the stratified structure with depth-variation of the compressive strength is obtained by linear and throughgoing channels 32 with decreasing cross-sectional area for each successive layer 31 deeper down in the block 30. The embodiment shown in the figure has a covering layer 33. Similarly, in the example embodiment shown in figure 7c), the stratified structure with depth-variation of the compressive strength is obtained by linear and throughgoing holes 42 drilled out of the block 40. In this embodiment the increase in void space percentage is obtained by both varying the diameter of the holes and their numbers in the successive layers 41. The embodiment shown in the figure has a covering layer 43.

In some embodiments, the linear and throughgoing voids, channels or holes in the layers of the block may advantageously be aligned in parallel with the longitudinal centre axis or angled with an angle $\alpha$, where $0° < \alpha \leq 45°$, towards the longitudinal centre axis of the arrestor-bed, or a combination of both such that they will function as the linear stripes/zones according to the first aspect of the invention.

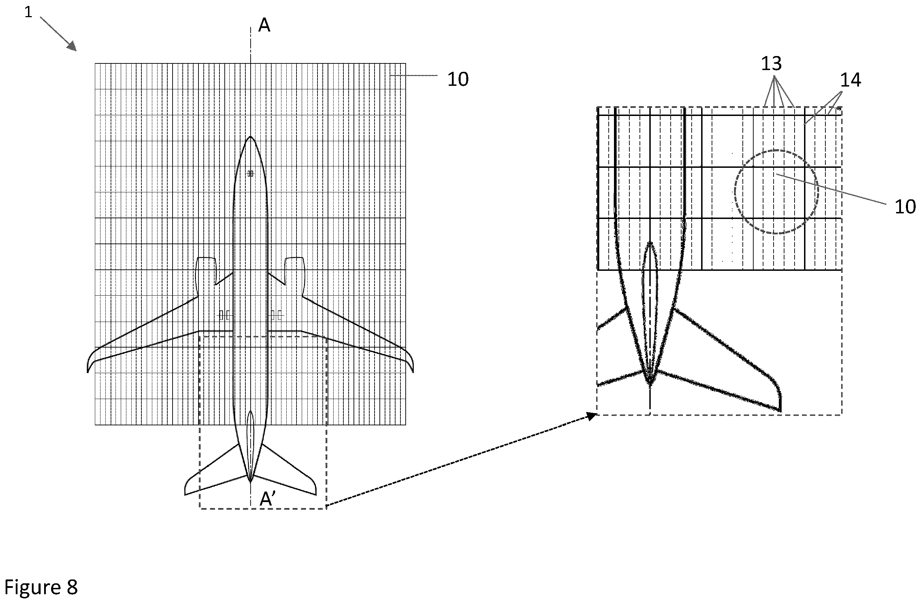

Linear and throughgoing voids, channels or holes aligned in parallel with the longitudinal centre axis provides the arrestor-bed with a course correcting effect guiding the travelling path of wheels of a vehicle entering the arrestor-bed to move in a straight line in parallel with the longitudinal centre axis of the arrestor-bed. An example embodiment of an arrestor-bed with linear and throughgoing voids, channels or holes aligned in parallel with the longitudinal centre axis is illustrated schematically in figure 8. The figure is a drawing as seen from above and illustrates an arrestor-bed consisting of 14 rows á 12 blocks. As seen from the blow-up in the box with stapled lines, each block 10 (one single block is marked with a stapled circle) has a set of linear and throughgoing voids aligned in parallel with the longitudinal centre axis of the arrestor bed, and the linear and throughgoing voids in a block are aligned with the linear and throughgoing voids in the blocks at the similar position in successive rows such that they form a continuous void going through the entire arrestor-bed. The sides of the blocks 10 are marked with solid lines 14 while the linear and throughgoing voids are marked with stapled lines 13 on the figure.

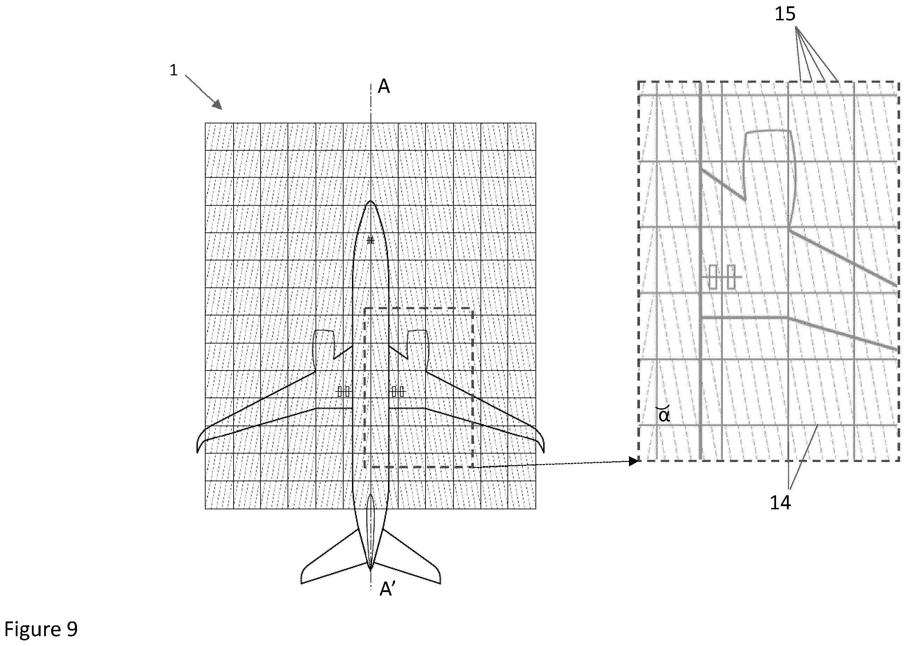

Similarly, linear and throughgoing voids, channels or holes angled with an angle $\alpha$, where $0° < \alpha \leq 45°$, towards the longitudinal centre axis of the arrestor-bed provides the arrestor bed with a centralising effect assisting the vehicle/aircraft to pass through the arrestor-bed in parallel and along the longitudinal centre axis of the arrestor-bed. An example embodiment of an arrestor-bed with linear and through-going voids, channels or holes angled towards the longitudinal centre axis forming an inverted V-shape is illustrated schematically in figure 9. The figure is a drawing as seen from above and illustrates an arrestor-bed consisting of 14 rows á 12 blocks. As seen from the drawing, the linear and throughgoing voids 15 are angled towards the longitudinal centre axis with an angle $\alpha$ on both sides of the centre axis such that each "pair" of linear and throughgoing voids form an inverted V-shape. The sides of the blocks 10 are marked with solid lines 14 while the linear and throughgoing voids are marked with stapled lines 15 on the figure.

## List of figures

Figure 1 is a facsimile from Wikipedia showing a photograph of an aircraft wheel having entered an EMAS bed and forced to stop, https://en.wikipedia.org/wiki/Engineered_materials_arrestor_system.

Figure 2 is a diagram showing a typical compression stress-strain curve for a compactible foam material.

Figures 3a) and 3b) are drawings schematically illustrating the penetration depth of a heavy wheel (figure 3a)) and a lighter wheel (figure 3b)) entering an arrestor-bed having a stratified structure of a multiple of layers of compactible foam material with low compressive strength of the top layer and increasingly stronger compactible foam materials in the layer below.

Figures 4a) and 4b) are drawings schematically illustrating an example embodiment of a block type arrestor-bed and a monolith type arrestor-bed, respectively.

Figures 5a) and 5b) are drawings illustrating a block with depth-variation and inclination according an example embodiment of the invention.

Figure 6 is a drawing illustrating an arrestor-bed assembled by the blocks shown in figures 5a) and 5b).

Figures 7a) to 7 c) are drawings schematically illustrating example embodiments of blocks having a stratified structure with depth-variation of the compressive strength and throughgoing voids according to the invention, an embodiment where the layers with throughgoing voids are made by strips glued together with a distance is shown in figure 7a), an embodiment where the with throughgoing voids are made by forming channels with decreasing cross-sectional area for each successive layer deeper down in the block is shown in figure 7b), and an embodiment where linear and throughgoing holes are drilled out of the block.

Figure 8 is a drawing as seen from above of an example embodiment of an arrestor-bed according to the invention having linear throughgoing voids running in parallel with the longitudinal centre axis of the bed.

Figure 9 is a drawing as seen from above of an example embodiment of an arrestor-bed according to the invention having angled linear throughgoing voids forming an inverted V-shape.

**Example embodiment of the invention**

The invention is described in further detail by way of an example embodiment of an arrestor-bed intended to arrest aircrafts and which has a depth-variation in the compressive strength obtained by strata layers having different compression strength.

Barsotti et al. [1], see chapter 12, and Barsotti [2] have investigated and found that the optimal depth-variation for arrestor-beds intended for a mixed fleet of aircrafts is an increase in the compressive strength of 4.3 kPa per cm (1.6 psi per inch) depth into the arrestor bed assuming a 76.2 cm (30 inch) deep arrestor-bed.

The example embodiment of the arrestor-bed consisted of 1058 prefabricated blocks of foamed glass, each measuring 2.13 m in length and width, and a height of 76 cm. The blocks are assembled in 23 rectilinear columns and 46 rectilinear rows resulting in an arrestor-bed having a width of 49 m and a length of 98 m. I.e., the arrestor-bed covers a surface area comparable to a small football field.

Each prefabricated block of this example embodiment of the arrestor-bed consists is made up of 6 strata layers made of foamed glass having a single compression strength of 358.5 kPa (52 psi), but which the depth variation in the strata layers is obtained by various void ratios of rectilinear voids in the strata layers. Void spaces in the strata layers effectively reduce the average presented area of material during compaction, which lowers the effective compaction strength of the stratified cross-section.

In general, the approximate compaction strength of a layer of crushable foam with voids can be given by the effective compaction strength, $\sigma_e$:

$$\sigma_e = \frac{V_M}{V_0} \cdot \sigma \qquad\qquad (1)$$

where $V_M$ is volume of foam material in a strata layer without voids, $V_0$ is volume of foam material of a strata layer including voids, and $\sigma$ is the compression strength of the foam glass (without voids). The energy dissipation per unit length of tire travel through each strata layer is equal to the volume of crushable material that is compacted in the layer times the effective compaction strength of the strata layer.

The rectilinear voids in the strata layers are in this example embodiment formed by bores drilled through the strata layers as shown in figure 7c), but may alternatively made by milling grooves as seen in figure 7b), or having the strata layers constructed by strips of foamed glass having a gap between them as shown in figure 7a). As given above, these rectilinear bores drilled in the strata layers will attain the function as the linear zones having a compressive strength lower than the bulk compressive strength if the bores are made to run in parallel with the longitudinal centre axis of the arrestor-bed.

Since each strata layer in a 30 inch tall bed has a height/thickness of 5 inches (12.7 cm), the adjustment of the number of and/or the diameter of the drilled bores in each strata layer such that the void volume becomes 77 % for the first (upper), 62 % of the second, 46 % for the third, 31 % for the fourth, 15 % for the fifth and 0 % for the sixth (bottom) strata layer, obtains, as given by eqn. (1) and summarised in table 1, a stepwise depth variation in the effective compression strength, $\sigma_e$, for each successive strata layer corresponding to 1.6 psi/inch (4.3 kPa per cm):

Table 1

| Layer No | Target Crush Strength | Foam Strength | Void Volume Ratio | Foam Volume Ratio | Effective Layer Strength |
|---|---|---|---|---|---|
| | psi | psi | | | psi |
| 1 | 12.0 | 52 | 77% | 23% | 12.0 |
| 2 | 20.0 | 52 | 62% | 38% | 20.0 |
| 3 | 28.0 | 52 | 46% | 54% | 28.0 |
| 4 | 36.0 | 52 | 31% | 69% | 36.0 |
| 5 | 44.0 | 52 | 15% | 85% | 44.0 |
| 6 | 52.0 | 52 | 0% | 100% | 52.0 |

References

1. Matt Barsotti et al. (2009), "ACRP Report 29: Developing Improved Civil Aircraft Arresting Systems" US Transportation Research Board, DOI:10.17226/14340

2. M. Barsotti, "Optimization of a Passive Aircraft Arrestor with a Depth-Varying Crushable Material Using a Smoothed Particle Hydrodynamics (SPH) Model," UMI / Proquest LLC, Ann Arbor, 2008.

Claims

1. A vehicle arresting system, comprising:

an arrestor-bed of a compactible foam material having a bulk compressive strength and a longitudinal centre axis extending from a front end, the front end being a side of the arrestor-bed at which a vehicle is expected to enter the arrestor-bed, to a back end opposite the front end,
the arrestor-bed further comprises a plurality of linear zones in the compactible foam material having a compressive strength lower than the bulk compressive strength of the compactible foam material, **characterised in that** each of the linear

zones extends:
either

a) in parallel with the longitudinal centre axis of the bed,
or
b) is angled with an angle $\alpha$, where $0° < \alpha \leq 45°$, towards the longitudinal centre axis of the arrestor-bed, such that the plurality forms, as seen from above, an inverted V-pattern relative to a direction from the front end to the back end of the arrestor-bed,
or
c) a combination of a) and b).

2. The vehicle arresting system according to claim 1, wherein the set of linear zones of relatively low compressive strength is angled with an angle $\alpha$, where $0° < \alpha \leq 40°$, preferably $1° \leq \alpha \leq 35°$, more preferably $2° \leq \alpha \leq 30°$, more preferably $3° \leq \alpha \leq 25°$, more preferably $4° \leq \alpha \leq 20°$, more preferably $5° \leq \alpha \leq 15°$, and most preferably $5° \leq \alpha \leq 10°$.

3. The vehicle arresting system according to claim 1 or 2, wherein the compactible foam material is a material chosen cellular cement, cellular cementitious material, foam cement, polymeric foam, honeycomb, metal honeycomb, vermiculite, perlite, ceramics, foam glass and other isotropic or anisotropic compactible/deformable materials, or combinations thereof.

4. The vehicle arresting system according to any preceding claim, wherein the compressive strength of the compactible foam material may advantageously be in the range from 6.9 to 689.8 kPa, preferably from 68.9 to 620.5 kPa, more preferably from 137.9 to 551.8 kPa, more preferably from 206.8 to 482.6 kPa, and most preferably from 275.8 to 413.7 kPa.

5. The vehicle arresting system according to any preceding claim, wherein the plurality of linear zones in the compactible foam material having a compressive strength lower than the bulk compressive strength of the compactible foam material are provided in the form of; a compactible foam material having a relatively low compressive strength, a compactible foam material having a higher porosity than the bulk compactible foam material, through-going holes in the compactible foam material, linear channels/depressions/trenches in the upper surface and a distance down into the arrestor-bed extending partially or completely through the depth of the arrestor-bed.

6. The vehicle arresting system according to any preceding claim, wherein the arrestor-bed has a depth-variation in the compressive strength with increasing compressive strength with increased depth of the bed obtained by providing the arrestor-bed with a stratified structure of a multiple of layers of compactible foam material having higher compressive strength for each consecutive layer of compactible foam material down to the bottom layer of the arrestor-bed.

7. The vehicle arresting system according to any preceding claim, wherein the arrestor-bed may is made of prefabricated blocks of the compactible foam material being assembled and adhered together by gluing, caulking, or adhesive tape, and vhere the prefabricated blocks are shaped:
either

into a rectangular parallelepiped having a rectangular base of length l and width w, where w ≠ l, and height h, or
into a rectangular parallelepiped having a square base of length l and width w, where w = l, and height h.

8. The vehicle arresting system according to claim 7, wherein the prefabricated block (10):

comprises a vertical stack of a plurality of stratified layers (9) adhered to each other and where each stratified layer (9) consists of one smaller block (7), or
comprises a vertical stack of a plurality of stratified layers (9) adhered to each other and where each stratified layer (9) consists of a second plurality of smaller blocks (8) arranged in a single horizontal plane and where the smaller blocks (8) of a stratified layer (9) are offset relative to plurality of smaller blocks (8) of the stratified layer (9) beneath and/or above it from a bottom layer to a top layer such that the smaller blocks (8) of the prefabricated block (10) form a brick pattern.

9. The vehicle arresting system according to claim 8, wherein the one or the second plurality of smaller blocks (7, 8) of the top layer (9) of the stratified prefabricated block (10) has/have a first compressive strength, the one or the second plurality of smaller blocks (7, 8) of the first stratified layer (9) below the top layer has/have a second compressive strength, the one or the second plurality of smaller blocks (7, 8) of the second stratified layer (9) below the top layer has/have a third compressive strength, and so until the bottom stratified layer (9), and where the first compressive strength< the second compressive strength< the third compressive strength and so on until the bottom stratified layer (9).

10. The vehicle arresting system according to claim 9, wherein the stratified layers (9) of the prefabricated blocks (10) are inclined such that the stratified layers (9) are substantially parallel with a longitudinal centre axis in the longitudinal direction and slope downwards in lateral direction towards the longitudinal centre axis of the arrestor-bed.

**Patentansprüche**

1. Fahrzeugarretiersystem umfassend:

ein Arretierbett aus einem kompaktierbaren Schaumstoffmaterial mit einer Volumendruckfestigkeit und einer Längsmittelachse, die sich von einem vorderen Ende, wobei das vordere Ende eine Seite des Arretierbetts ist, an der Eintreten eines Fahrzeugs in das Arretierbett erwartet wird, zu einem hinteren Ende gegenüber dem vorderen Ende erstreckt,
wobei das Arretierbett ferner eine Vielzahl von linearen Zonen in dem kompaktierbaren Schaumstoffmaterial aufweist, die eine Druckfestigkeit aufweisen, die niedriger als die Volumendruckfestigkeit des kompaktierbaren Schaumstoffmaterials ist, **dadurch gekennzeichnet, dass** jede der linearen Zonen:
entweder

a) sich parallel zu der Längsmittelachse des Betts erstreckt,
oder
b) mit einem Winkel $\alpha$, wobei $0° < \alpha \leq 45°$, zu der Längsmittelachse des Arretierbetts hin gewinkelt ist, so dass die Vielzahl von oben gesehen eine invertierte **V**-Struktur relativ zu einer Richtung von dem vorderen Ende zu dem hinteren Ende des Arretierbetts bildet,
oder
c) eine Kombination von a) und b).

2. Fahrzeugarretiersystem nach Anspruch 1, wobei der Satz von linearen Zonen mit relativ niedriger Druckfestigkeit mit einem Winkel $\alpha$ gewinkelt ist, wobei $0° < \alpha \leq 40°$, vorzugsweise $1° \leq \alpha \leq 35°$, bevorzugter $2° \leq \alpha \leq 30°$, bevorzugter $3° \leq \alpha \leq 25°$, bevorzugter $4° \leq \alpha \leq 20°$, bevorzugter $5° \leq \alpha \leq 15°$ und höchst bevorzugt $5° \leq \alpha \leq 10°$.

3. Fahrzeugarretiersystem nach Anspruch 1 oder 2, wobei das kompaktierbare Schaumstoffmaterial ein Material ausgewählt aus Zellzement, Zellzementmaterial, Schaumzement, Polymerschaumstoff, Waben, Metallwaben, Vermikulit, Perlit, Keramik, Schaumglas und anderen isotropen oder anisotropen kompaktierbaren/verformbaren Materialien und Kombinationen davon ist.

4. Fahrzeugarretiersystem nach einem der vorstehenden Ansprüche, wobei die Druckfestigkeit des kompaktierbaren Schaumstoffmaterials vorteilhaft in dem Bereich von 6,9 bis 689,8 kPa, vorzugsweise von 68,9 bis 620,5 kPa, bevorzugter von 137,9 bis 551,8 kPa, bevorzugter von 206,8 bis 482,6 kPa und höchst bevorzugt von 275,8 bis 413,7 kPa liegen kann.

5. Fahrzeugarretiersystem nach einem der vorstehenden Ansprüche, wobei die Vielzahl von linearen Zonen in dem kompaktierbaren Schaumstoffmaterial, die eine Druckfestigkeit aufweisen, die niedriger ist als die Volumendruckfestigkeit des kompaktierbaren Schaumstoffmaterials, in der Form bereitgestellt werden von; einem kompaktierbaren Schaumstoffmaterial mit einer vergleichsweise geringen Druckfestigkeit, einem kompaktierbaren Schaumstoffmaterial mit einer höheren Porosität als das kompaktierbare Volumen-Schaumstoffmaterial, durchgehenden Löchern in dem kompaktierbaren Schaumstoffmaterial, linearen Kanälen/Vertiefungen/Gräben in der oberen Oberfläche und einem in das Arretierbett hinein verlaufenden Abstand, der sich teilweise oder vollständig durch die Tiefe des Arretierbetts erstreckt.

6. Fahrzeugarretiersystem nach einem der vorstehenden Ansprüche, wobei das Arretierbett eine Tiefenvariation der Druckfestigkeit mit bei zunehmender Tiefe des Betts zunehmender Druckfestigkeit aufweist, erhalten durch Versehen des Arretierbetts mit einer Schichtstruktur aus einer Mehrzahl von Lagen von kompaktierbarem Schaumstoffmaterial mit höherer Druckfestigkeit für jede aufeinanderfolgende Lage von kompaktierbarem Schaumstoffmaterial bis hinunter zu der untersten Lage des Arretierbetts.

7. Fahrzeugarretiersystem nach einem der vorstehenden Ansprüche, wobei das Arretierbett aus vorgefertigten Blöcken des kompaktierbaren Schaumstoffmaterials hergestellt sein kann, die durch Verkleben, Verstemmen oder Klebeband zusammengesetzt und aneinander befestigt sind, und wobei die vorgefertigten Blöcke geformt sind: entweder

zu einem rechteckigen Parallelepiped mit einer rechteckigen Basis mit der Länge l und der Breite w, wobei w ≠ l, und der Höhe h,
oder
zu einem rechteckigen Parallelepiped mit einer quadratischen Basis mit der Länge l und der Breite w, wobei w = l, und der Höhe h.

8. Fahrzeugarretiersystem nach Anspruch 7, wobei der vorgefertigte Block (10):

einen vertikalen Stapel aus einer Vielzahl von aneinander befestigten Schichtlagen (9) umfasst und wobei jede Schichtlage (9) aus einem kleineren Block (7) besteht, oder
einen vertikalen Stapel aus einer Vielzahl von aneinander befestigten Schichtlagen (9) umfasst und wobei jede Schichtlage (9) aus einer zweiten Vielzahl von kleineren Blöcken (8) besteht, die in einer einzigen horizontalen Ebene angeordnet sind, und wobei die kleineren Blöcke (8) einer Schichtlage (9) gegenüber einer Vielzahl von kleineren Blöcken (8) der Schichtlage (9) darunter und/oder darüber von einer unteren Lage zu einer oberen Lage versetzt sind, so dass die kleineren Blöcke (8) des vorgefertigten Blocks (10) ein Backsteinmuster bilden.

9. Fahrzeugarretiersystem nach Anspruch 8, wobei die eine oder die zweite Vielzahl von kleineren Blöcken (7, 8) der Decklage (9) des vorgefertigten Schichtblocks (10) eine erste Druckfestigkeit aufweist/aufweisen, die eine oder die zweite Vielzahl von kleineren Blöcken (7, 8) der ersten Schichtlage (9) unterhalb der Decklage eine zweite Druckfestigkeit aufweist/aufweisen, die eine oder die zweite Vielzahl von kleineren Blöcken (7, 8) der zweiten Schichtlage (9) unterhalb der Deckschicht eine dritte Druckfestigkeit aufweist/aufweisen, und so fort bis zu der untersten Schichtlage (9), und wobei die erste Druckfestigkeit < die zweite Druckfestigkeit < die dritte Druckfestigkeit und so fort bis zur untersten Schichtlage (9).

10. Fahrzeugarretiersystem nach Anspruch 9, wobei die Schichtlagen (9) der vorgefertigten Blöcke (10) so geneigt sind, dass die Schichtlagen (9) im Wesentlichen parallel zu einer Längsmittelachse in der Längsrichtung sind und in Seitenrichtung zu der Längsmittelachse des Arretierbetts nach unten geneigt sind.

## Revendications

1. Système d'arrêt de véhicule, comprenant :

   un lit d'arrêt en matériau alvéolaire compactable ayant une résistance à la compression en vrac et un axe central longitudinal s'étendant depuis une extrémité avant, l'extrémité avant étant un côté du lit d'arrêt par lequel un véhicule est censé pénétrer dans le lit d'arrêt, jusqu'à une extrémité arrière à l'opposé de l'extrémité avant, le lit d'arrêt comprenant en outre une pluralité de zones linéaires dans le matériau alvéolaire compactable ayant une résistance à la compression inférieure à la résistance à la compression en vrac du matériau alvéolaire compactable, **caractérisé en ce que** chacune des zones linéaires :
   soit

   a) s'étend parallèlement à l'axe central longitudinal du lit,
   soit
   b) est inclinée d'un angle $\alpha$, où $0° < \alpha \leq 45°$, vers l'axe central longitudinal du lit d'arrêt, de telle sorte que la pluralité forme, vue de dessus, un motif en V inversé par rapport à une direction allant de l'extrémité avant à l'extrémité arrière du lit d'arrêt,
   soit
   c) une combinaison de a) et b).

2. Système d'arrêt de véhicule selon la revendication 1, dans lequel l'ensemble de zones linéaires de résistance à la compression relativement faible est incliné d'un angle $\alpha$, où $0° < \alpha \leq 40°$, de préférence $1° \leq \alpha \leq 35°$, mieux $2° \leq \alpha \leq 30°$, mieux encore $3° \leq \alpha \leq 25°$, mieux $4° \leq \alpha \leq 20°$, mieux encore $5° \leq \alpha \leq 15°$, et idéalement $5° \leq \alpha \leq 10°$.

3. Système d'arrêt de véhicule selon la revendication 1 ou 2, dans lequel le matériau alvéolaire compactable est un matériau choisi parmi le ciment cellulaire, les matériaux cimentaires cellulaires, le ciment mousse, la mousse polymère, les structures en nid d'abeilles, les structures en nid d'abeilles métalliques, la vermiculite, la perlite, les céramiques, le verre mousse et les autres matériaux compactables/déformables isotropes ou anisotropes, et les combinaisons de ceux-ci.

4. Système d'arrêt de véhicule selon une quelconque revendication précédente, dans lequel la résistance à la compression du matériau alvéolaire compactable peut avantageusement se situer dans la plage de 6,9 à 689,8 kPa, de préférence de 68,9 à 620,5 kPa, mieux de 137,9 à 551,8 kPa, mieux encore de 206,8 à 482,6 kPa, et idéalement de 275,8 à 413,7 kPa.

5. Système d'arrêt de véhicule selon une quelconque revendication précédente, dans lequel la pluralité de zones linéaires dans le matériau alvéolaire compactable ayant une résistance à la compression inférieure à la résistance à la compression en vrac du matériau alvéolaire compactable sont fournies sous la forme : d'un matériau alvéolaire compactable ayant une résistance à la compression relativement faible, d'un matériau alvéolaire compactable ayant une plus forte porosité que le matériau alvéolaire compactable en vrac, de trous traversants dans le matériau alvéolaire compactable, de canaux/creux/tranchées linéaires dans la surface supérieure et sur une distance en descendant à l'intérieur du lit d'arrêt s'étendant partiellement ou entièrement sur la profondeur du lit d'arrêt.

6. Système d'arrêt de véhicule selon une quelconque revendication précédente, dans lequel le lit d'arrêt présente une variation sur la profondeur de la résistance à la compression avec une résistance à la compression croissante avec une plus grande profondeur du lit obtenue en dotant le lit d'arrêt d'une structure stratifiée de multiples couches de matériau alvéolaire compactable ayant une plus forte résistance à la compression pour chaque couche successive de matériau alvéolaire compactable en descendant jusqu'à la couche inférieure du lit d'arrêt.

7. Système d'arrêt de véhicule selon une quelconque revendication précédente, dans lequel le lit d'arrêt peut être constitué de blocs préfabriqués du matériau alvéolaire compactable que l'on assemble et que l'on fait adhérer les uns aux autres par collage, masticage ou avec du ruban adhésif, et dans lequel les blocs préfabriqués sont façonnés : soit

en parallélépipède rectangulaire ayant une base rectangulaire de longueur 1 et de largeur w, où w ≠ l, et de hauteur h,
soit
en parallélépipède rectangulaire ayant une base carrée de longueur 1 et de largeur w, où w = l, et de hauteur h.

8. Système d'arrêt de véhicule selon la revendication 7, dans lequel le bloc préfabriqué (10) :

comprend un empilement vertical d'une pluralité de couches stratifiées (9) adhérant les unes aux autres et où chaque couche stratifiée (9) consiste en un bloc plus petit (7), ou
comprend un empilement vertical d'une pluralité de couches stratifiées (9) adhérant les unes aux autres et où chaque couche stratifiée (9) consiste en une deuxième pluralité de blocs plus petits (8) disposés dans un seul plan horizontal et où les blocs plus petits (8) d'une couche stratifiée (9) sont décalés par rapport à la pluralité de blocs plus petits (8) de la couche stratifiée (9) en dessous et/ou au-dessus de celle-ci depuis une couche inférieure jusqu'à une couche supérieure de telle sorte que les blocs plus petits (8) du bloc préfabriqué (10) forment un motif de briques.

9. Système d'arrêt de véhicule selon la revendication 8, dans lequel le bloc plus petit ou la deuxième pluralité de blocs plus petits (7, 8) de la couche supérieure (9) du bloc préfabriqué stratifié (10) a/ont une première résistance à la compression, le bloc plus petit ou la deuxième pluralité de blocs plus petits (7, 8) de la première couche stratifiée (9) en dessous de la couche supérieure a/ont une deuxième résistance à la compression, le bloc plus petit ou la deuxième pluralité de blocs plus petits (7, 8) de la deuxième couche stratifiée (9) en dessous de la couche supérieure a/ont une troisième résistance à la compression, et ainsi de suite jusqu'à la couche stratifiée inférieure (9), et dans lequel la première résistance à la compression < la deuxième résistance à la compression < la troisième résistance à la compression, et ainsi de suite jusqu'à la couche stratifiée inférieure (9).

10. Système d'arrêt de véhicule selon la revendication 9, dans lequel les couches stratifiées (9) des blocs préfabriqués (10) sont inclinées de telle sorte que les couches stratifiées (9) sont sensiblement parallèles à un axe central longitudinal dans la direction longitudinale et suivent une pente descendante dans une direction latérale vers l'axe central longitudinal du lit d'arrêt.

Figure 1

Figure 2   facsimile of figure 7-2 of ACRP 29

Figure 3

EP 4 373 747 B1

Figure 4

b)

12

10

a)

A'

A

9

10

Figure 5

Figure 6

EP 4 373 747 B1

Figure 7

Figure 8

Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3967704 A
- US 5885025 A
- US 10458073 B2
- US 2019084693 A
- US 2015247298 A

### Non-patent literature cited in the description

- **MATT BARSOTTI et al.** ACRP Report 29: Developing Improved Civil Aircraft Arresting Systems. *US Transportation Research Board*, 2009
- **M. BARSOTTI**. Optimization of a Passive Aircraft Arrestor with a Depth-Varying Crushable Material Using a Smoothed Particle Hydrodynamics (SPH) Model. *UMI / Proquest LLC*, 2008